# EUROPEAN PATENT APPLICATION

(11) **EP 1 775 924 A1**
(43) Date of publication of application: **18.04.2007**
(21) Application number: 05109601.4
(22) Date of filing: 14.10.2005
(51) Int. Cl.: H04M 1/725

(54) **Using separate icons for invoking a computer program for presenting distinct sets of service-specific electronic mail messages stored at a wireless communication device**

(71) Applicant: Research In Motion Limited, Waterloo, Ontario N2L 3W8 (CA)
(72) Inventor: Hardy, Michael Thomas, Waterloo Ontario N2T 2J8 (CA); Bocking, Andrew Douglas, Waterloo Ontario N2K 3Y8 (CA); Zinn, Scotte, Waterloo Ontario N2L 5T9 (CA); Castell, William David, Waterloo Ontario N2L 5P3 (CA); Hurren, Bryan David, Issaquah WA Washington 98029 (US)
(74) Representative: Rickard, David John

(57) **Abstract**

At a wireless communication device having memory storing multiple sets of electronic mail (email) messages, each of the sets of email messages having been received via a distinct email service account, multiple selectable icons are displayed. Each icon is for invoking a computer program for presenting a distinct one of the sets of email messages at the wireless communication device upon its selection. Each icon may include or be limited to a textual component which may identify the relevant email service and may indicate a number of unread messages. The icon may be automatically downloaded to the device from a remote location based on a specified network address, such as a uniform resource locator (URL).

## Description

The present invention pertains to the use of separate icons for invoking a computer program for presenting distinct sets of service-specific electronic mail (email) messages at a wireless communication device.

Contemporary wireless communication devices (also referred to as "mobile communication devices" or "mobile devices") permit users to conveniently access multiple email service accounts wirelessly. A wireless communication device provider may provide an email redirection service which essentially collects email messages from a number of user-specified email service accounts (also referred to as "email accounts" or simply "accounts") for forwarding to the device. For example, a user may specify a primary email account administered by a first provider A, such as joe@providerA.com, and a secondary email account administered by a second provider B, such as joe@providerB.com. Each provider is said to provide an email "service". Using user-specified account information (e.g. incoming email POP3 server IP address, account name, password, etc.), the redirection service aggregates messages from the primary service account and the secondary service account and forwards them to the wireless communication device. A unified email message list which intermingles messages from all of the user's accounts may be presented to the user at the device.

Viewing or searching email messages at such a wireless communication device may be cumbersome or time consuming in view of the sheer number of messages which may be presented there from numerous email accounts.

In one aspect of the present invention, there is preferably provided a method comprising: at a wireless communication device having memory storing multiple sets of electronic mail (email) messages, each of the sets of email messages having been received via a distinct email service account, displaying a plurality of selectable icons, each of said icons for invoking a computer program for presenting a distinct one of the sets of email messages at a user interface of said wireless communication device upon its selection.

In another aspect of the present invention, there is preferably provided a machine-readable medium including code for execution at a wireless communication device, comprising: machine-executable code for displaying a plurality of selectable icons at said wireless communication device, said wireless communication device having memory storing multiple sets of electronic mail (email) messages, each of the sets of email messages having been received via a distinct email service account, each of said icons for invoking a computer program for presenting a distinct one of the sets of email messages at a user interface of said wireless communication device upon its selection.

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

In the figures which illustrate example embodiments of this invention:

FIG. 1 is a schematic diagram illustrating a wireless communication device exemplary of an embodiment of the present invention;

FIG. 2 is a schematic diagram illustrating components of a computer program used to display email messages of FIG. 1;

FIG. 3 is a schematic diagram illustrating an exemplary service book stored in flash memory the device of FIG. 1;

FIG. 4 is a flowchart illustrating operation of the device of FIG. 1 when an email service is provisioned;

FIGS. 5A and 5B illustrate icons displayed on a home screen of the device of FIG. 1;

FIG. 6 illustrates operation at the device of FIG. 1 for presenting a set of service-specific messages;

FIG. 7 illustrates a user interface generated by the computer program of FIG. 2 for presenting email messages;

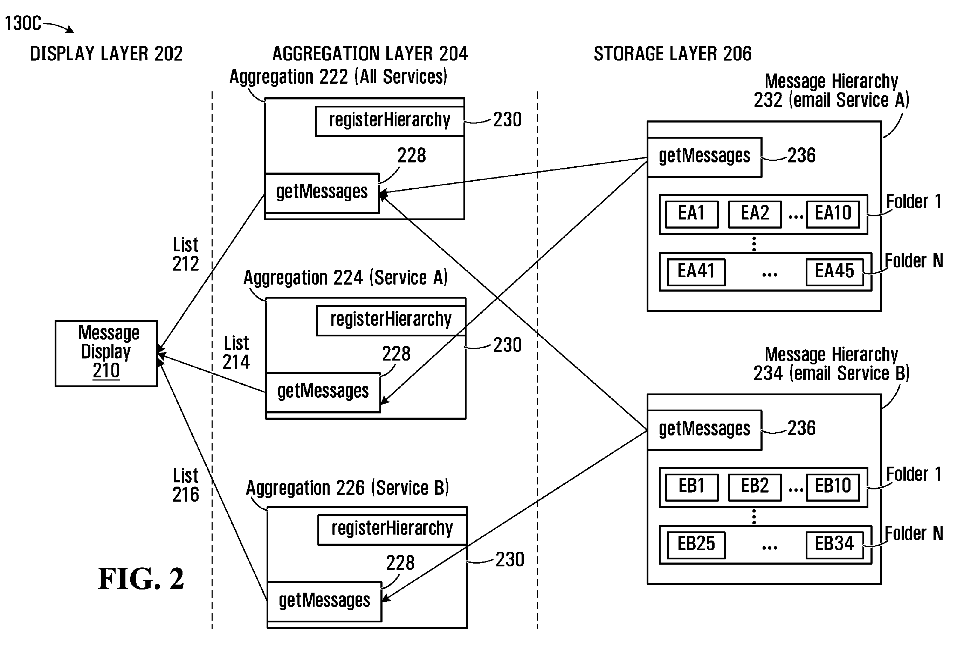

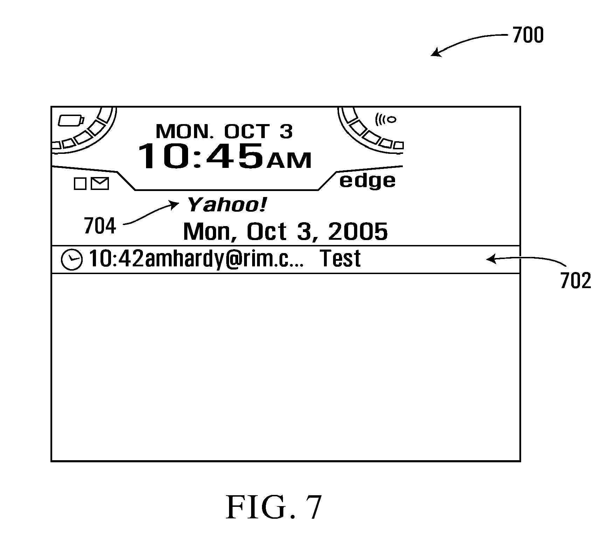

FIG. 7 illustrates a user interface generated by the computer program of FIG. 2 for presenting email messages;

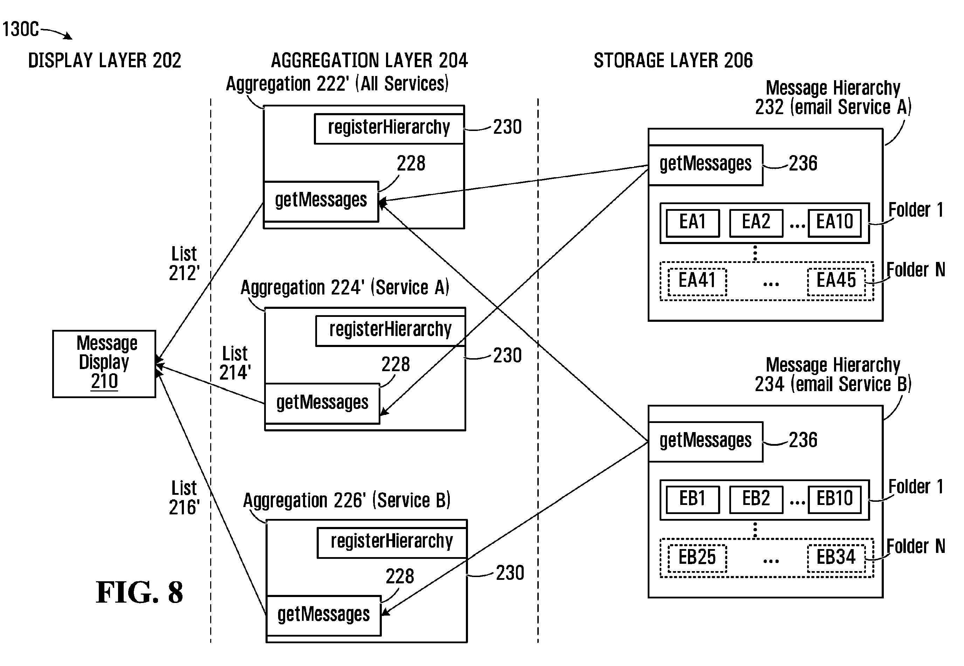

FIG. 8 is a schematic diagram further illustrating components of the computer program of FIG. 2;

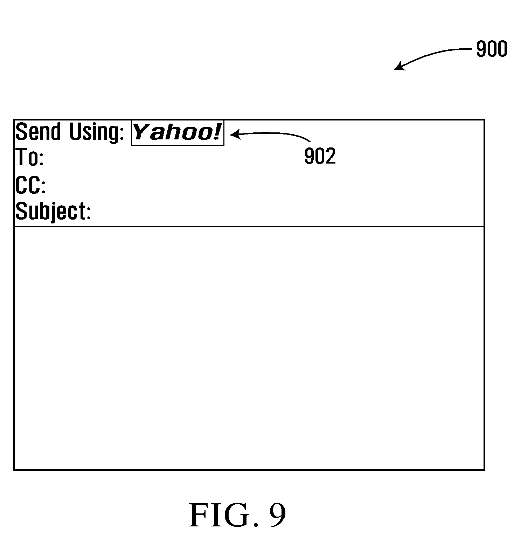

FIG. 9 illustrates a user interface generated by the computer program of FIG. 2 for composing an email message; and

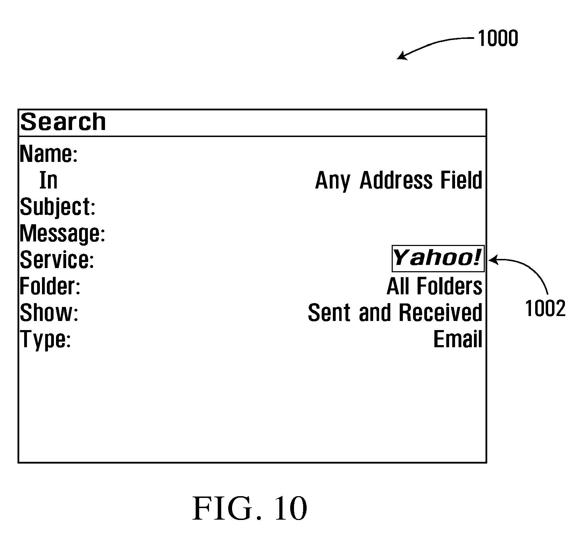

FIG. 10 illustrates a user interface generated by the computer program of FIG. 2 for searching email messages.

### DESCRIPTION OF PREFERRED EMBODIMENTS

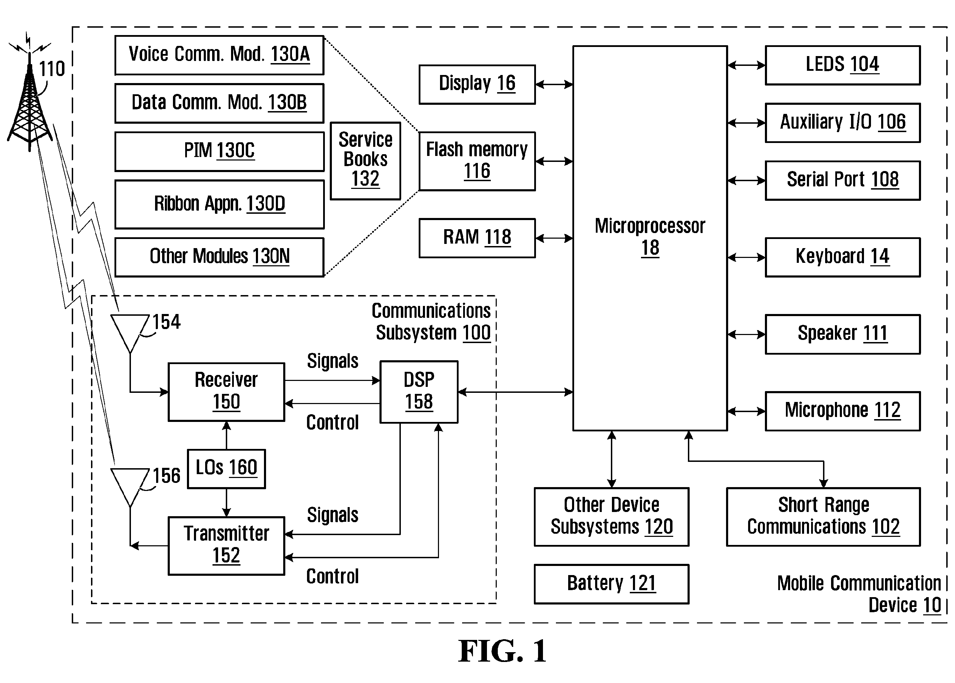

FIG. 1 illustrates a hand-held wireless communication device 10 including a housing, an input device, a keyboard 14, and an output device, a display 16, which may be a full graphic LCD. Other types of output devices may alternatively be utilized. A processing device, a microprocessor 18, is shown schematically in FIG. 1 as coupled between the keyboard 14 and the display 16. The microprocessor 18 controls the operation of the display 16, as well as the overall operation of the mobile device 10, in response to actuation of keys on the keyboard 14 by the user.

The housing may be elongated vertically, or may take on other sizes and shapes (including clamshell housing structures). The keyboard may include a mode selection key, or other hardware or software for switching between text entry and telephony entry.

In addition to the microprocessor 18, other parts of the mobile device 10 are shown schematically in FIG. 1. These include: a communications subsystem 100; a short-range communications subsystem 102; the keyboard 14 and the display 16, along with other input/output devices including a set of auxiliary I/O devices 106, a serial port 108, a speaker 111 and a microphone 112; as well as memory devices including a flash memory 116 and a Random Access Memory (RAM) 118; and various other device subsystems 120. The device 10 may have a battery 121 to power the active elements of the device. The mobile device 10 is preferably a two-way RF communication device having voice and data communication capabilities. In addition, the mobile device 10 preferably has the capability to communicate with other computer systems via the Internet.

Operating system software executed by the microprocessor 18 is preferably stored in a persistent store, such as the flash memory 116, but may be stored in other types of memory devices, such as a read only memory (ROM) or similar storage element. In addition, system software, specific device applications, or parts thereof, may be temporarily loaded into a volatile store, such as the RAM 118. Communication signals received by the mobile device may also be stored to the RAM 118.

The microprocessor 18, in addition to its operating system functions, enables execution of software applications (computer programs) 130A-130N on the device 10. A predetermined set of applications that control basic device operations, such as voice and data communications 130A and 130B, may be installed on the device 10 during manufacture. In addition, a personal information manager (PIM) application 130C may be installed during manufacture. The PIM 130C is capable of organizing and displaying data items, such as email, calendar events, voice mails, appointments, and task items. The PIM application is also capable of sending and receiving data items, such as email messages, via a wireless network 110. The PIM data items may be synchronized and updated via the wireless network 110 with the device user's corresponding data items stored or associated with a host computer system. As will be appreciated, the PIM application 130C of the present embodiment is customized to facilitate the presentation of email messages on a service-specific (here, email account-specific) basis.

A ribbon application 130D is responsible for displaying a set of icons in a "ribbon" (i.e. a series of icons) on a home screen of the device's user interface. Each icon represents an application (e.g. the PIM application 130C, a calculator application, etc.) on the wireless communication device 10. As will be appreciated, separate icons on the ribbon will each cause the same application 130C to be invoked when selected, but each icon results in the presentation of a distinct set of service-specific email messages by that application.

Flash memory 116 also stores a set of service books 132. A service book is an electronic file which contains information about a service, such as an email service, which is available to the wireless communication device 10 through a wireless gateway. The information in a service book may include addressing information, service capabilities (such as compression or encryption), recognized data protocols, and the like. A service book effectively enables a specific service at the wireless communication device 10 and governs the manner in which the device 10 communicates with the service. In the present embodiment, service books 132 include two books which facilitate access to a two email service accounts. As will be described, the service books 132 are customized to support display of email messages on a service-specific basis.

Communication functions, including data and voice communications, are performed by device 10 through the communication subsystem 100, and possibly through the short-range communications subsystem 102. The communication subsystem 100 includes a receiver 150, a transmitter 152, and one or more antennas 154 and 156. In addition, the communication subsystem 100 also includes a processing module, such as a digital signal processor (DSP) 158, and local oscillators (LOs) 160. The specific design and implementation of the communication subsystem 100 is dependent upon the communication network in which the mobile device 10 is intended to operate. For example, the communication subsystem 100 of the mobile device 10 may be designed to operate with the Mobitex^{™}, DataTAC^{™} or General Packet Radio Service (GPRS) mobile data communication networks and may also be designed to operate with any of a variety of voice communication networks, such as AMPS, TDMA, CDMA, PCS, GSM, etc. Other types of data and voice networks, both separate and integrated, may also be utilized with the mobile device 10.

Network access requirements vary depending upon the type of communication system. For example, in the Mobitex^{™} and DataTAC^{™} networks, mobile devices are registered on the network using a unique personal identification number or PIN associated with each device. In GPRS networks, however, network access is associated with a subscriber or user of a device. A GPRS device therefore requires a subscriber identity module, commonly referred to as a SIM card, in order to operate on a GPRS network.

When required network registration or activation procedures have been completed, the wireless communication device 10 may send and receive communication signals over the communication network 110. Signals received from the communication network 110 by the antenna 154 are routed to the receiver 150, which provides for signal amplification, frequency down conversion, filtering, channel selection, etc., and may also provide analog-to -digital conversion. Analog-to-digital conversion of the received signal allows the DSP 158 to perform more complex communication functions, such as demodulation and decoding. In a similar manner, signals to be transmitted to the network 110 are processed (e.g. modulated and encoded) by the DSP 158 and are then provided to the transmitter 152 for digital-to-analog conversion, frequency up conversion, filtering, amplification and transmission to the communication network 110 (or networks) via the antenna 156.

In addition to processing communication signals, the DSP 158 provides for control of the receiver 150 and the transmitter 152. For example, gains applied to communication signals in the receiver 150 and transmitter 152 may be adaptively controlled through automatic gain control algorithms implemented in the DSP 158.

In a data communication mode, a received signal, such as a text message or web page download, is processed by the communication subsystem 100 and is input to the microprocessor 18. The received signal is then further processed by the microprocessor 18 for an output to the display 16, or alternatively to some other auxiliary I/O devices 106. A device user may also compose data items, such as email messages, using the keyboard 14 and/or some other auxiliary I/O device 106, such as a touchpad, a rocker switch, a thumb-wheel, or some other type of input device. The composed data items may then be transmitted over the communication network 110 via the communication subsystem 100.

In a voice communication mode, overall operation of the device is substantially similar to the data communication mode, except that received signals are output to a speaker 111, and signals for transmission are generated by a microphone 112. Alternative voice or audio I/O subsystems, such as a voice message recording subsystem, may also be implemented on the device 10. In addition, the display 16 may also be utilized in voice communication mode, for example to display the identity of a calling party, the duration of a voice call, or other voice call related information.

The short-range communications subsystem 102 enables communication between the mobile device 10 and other proximate systems or devices, which need not necessarily be similar devices. For example, the short-range communications subsystem may include an infrared device and associated circuits and components, or a Bluetooth^{™} communication module to provide for communication with similarly-enabled systems and devices.

FIG. 2 illustrates certain components of the PIM application 130C stored in flash memory 116 of device 10 in greater detail. In particular, FIG. 2 illustrates software components of PIM 130C which facilitate the service-specific display of email messages at the wireless communication device 10. Other components of PIM 130C, such as components which facilitate searching and composition of email messages, are omitted for clarity. PIM 130C may be authored in an object-oriented programming language, such as Java^{™}.

As illustrated, PIM 130C includes a display layer 202, an aggregation layer 204, and a storage layer 206.

Display layer 202 is responsible for displaying a visual representation of one or more email messages on display 16 of device 10 (FIG. 1). A message display software module 210 receives a list (a form of set) of email messages 212, 214 or 216 from aggregation layer 204 and displays visual representations of the email message of the received list on the display 16. For each email message in the list, an icon such as an envelope may be displayed along with various textual fields such as a sender account name, receipt time and date, and a subject descriptor for example. The email messages are displayed in the same order in which they are ordered in the received list. Although the module 210 has access to each of the email lists 212, 214 and 216 on demand, at any given time only one of these lists is obtained and processed for display at the display 116 of device 10. The decision of which list 212, 214 or 216 to access and display is based on upon the user's indication of an email service provider of interest, which is provided through selection of home screen icons as will be described.

Aggregation layer 204 is responsible for compiling lists of email messages 212, 214 or 216 for possible access and display by the module 210 of display layer 202. The lists 214 and 216 contain distinct sets of email messages received from distinct service providers. More specifically, list 214 contains only email messages received via a primary service account (e.g. joe@providerA.com), i.e. via a first email service A, and list 216 contains only email messages received via a secondary service account (e.g. joe@providerB.com), i.e. via a second email service B. In the present embodiment, the email messages are ordered within the lists 214 and 216 by time and date of receipt (although other ordering schemes could be used). List 212, on the other hand, represents a compilation of email messages from all services (all email accounts). List 212 is also ordered by time and date; email messages received via different services may be interleaved within it. It will be appreciated that list 212 reproduces the information stored in lists 214 and 216 in order to facilitate prompt display of email messages from all services in a single unified list, in the event that a user of device 10 chooses a unified message display format. The unified message display format is not the focus of the present description however.

Each list 212, 214 and 216, which may take the form of a Java^{™} vector of email objects for example, is compiled by an aggregation object 222, 224 or 226 respectively. In the present embodiment, each aggregation object 222, 224 and 226 is an instantiation of an object-oriented class, possibly referred to as a mergeCollection, which creates an ordered list of email messages. This is achieved by obtaining subsets of email messages from email hierarchy objects in the data storage layer 206 and ordering the email messages to create an ordered list. In the present embodiment, these actions are performed in response to an invocation of a getMesssages() method 228 of the relevant aggregation object 222, 224 or 226 by module 210. Each object 222, 224 and 226 also includes a registerHierarchy() method 230 by which email message hierarchies from the data storage later 206 make themselves known to the object. As will be appreciated, despite the fact that only one of the email lists 212, 214 or 216 will be requested by the message display module 210 at any given time, the lists 212, 214 and 216 will all be generated in any event, so whichever of the lists 212, 214 or 216 is needed will be ready with minimal delay.

Storage layer 206 is responsible for storing email messages at the wireless communication device 10. Email messages are stored in groups by email service account. All of the email messages received by way of a particular email service account are stored in an email message hierarchy associated with that service account. The email messages may be "pushed" to the device 10 by a web-server based redirector service, without any need for the device 10 to take steps for retrieving new messages, as described below. In the illustrated embodiment, storage layer 206 includes two email message hierarchies 232 and 234. In FIG. 2, the first email message hierarchy 232 is associated with the primary email service account (service A), and the second email message hierarchy 234 is associated with the second email service account (service B). Each hierarchy 232 and 234 may be an instance of an object-oriented hierarchy class.

In the present embodiment, each email message hierarchy 232, 234 registers with two aggregation objects within the aggregation layer 204: an overall aggregation object 222, whose responsibility is to aggregate email messages from all email services; and a service-specific aggregation object 224 or 226, each of whose responsibility is to aggregate email messages from a particular service (service A or B). Thus email message hierarchy 232 registers with aggregation objects 222 and 224 and email message hierarchy 234 registers with aggregation objects 222 and 226. Once an email message hierarchy has registered with an aggregation object, the latter object will invoke the hierarchy's getmessages() method 236 as necessary for generating an email message list 212, 214 or 216.

Each email hierarchy object 232 and 234 of the present embodiment stores email messages in a set of N folders. A folder is a grouping of email messages having at least one characteristic in common. For example, one folder may represent email messages which have been expressly categorized by the user, e.g. through filing of the messages in a user-specified directory at the device 10 (e.g., "work-related", "personal", etc.). Another folder may represent email messages which have been received but not categorized. A further folder may represent email messages which have been expressly tagged to prevent deletion of the email message in the event of automatic email purging in low memory situations. Within each folder, the email messages may be ordered by time and date of receipt.

Referring to email message hierarchy 232 of FIG. 2, a first folder 1 is shown to contain ten email messages denoted EA1, EA2, ..., EA10, wherein the abbreviation "EA" denotes "Email messages received via email service A" and wherein the suffix is a positive integer (starting with 1) which uniquely identifies the message. An Nth folder N is shown to have five email messages denoted EA41, EA42, ..., EA45, using the same format. Thus, email message hierarchy 232 stores a total of 45 email messages. The thirty email messages EA11 to EA40 which are not illustrated may be stored in any number of folders from one to thirty inclusive.

Email message hierarchy 234 is analogous to hierarchy 232, except that it stores email messages received via service B, and that the total number of stored email messages (34) differs from the total (45) in hierarchy 232. Although the number of folders N within hierarchy 234 is the same as at hierarchy 232 in FIG. 2, it is possible that the number of folders may differ in other hierarchies.

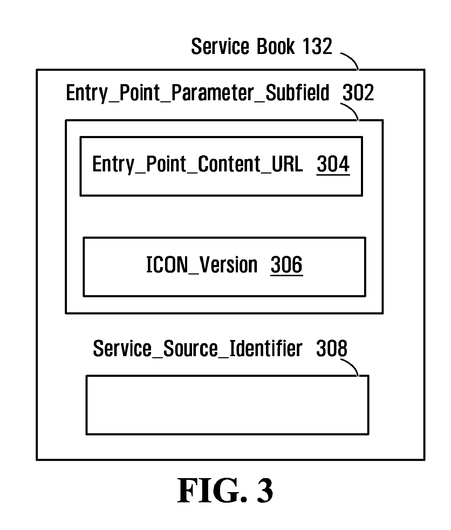

FIG. 3 is a schematic diagram illustrating an exemplary service book 132 stored in flash memory 116 of wireless communication device 10. Service book 132 is associated with service B (i.e. the joe@providerB.com email service account).

FIG. 3 illustrates only certain fields within the service book 132 which pertain to the service-specific display of email messages at device 10 according to the present embodiment. These fields include ENTRY_POINT_PARAMETER_SUBFIELD 302; ENTRY_POINT_CONTENT_URL 304; ICON_VERSION 306; and SERVICE_SOURCE_IDENTIFIER 308.

ENTRY_POINT_PARAMETER_SUBFIELD 302 is a field whose presence indicates that a separate "entry point" for the associated service (service B) should be created at the device 10. In other words, when field 302 is present, this means that it is desired for the wireless communication device 10 to provide a mechanism for displaying only messages received via service B. In the present embodiment, the mechanism is an icon in the ribbon on the home screen of the wireless communication device 10, as will be described.

ENTRY_POINT_CONTENT_URL 304 and ICON_VERSION 306 form "sub-fields" within the field 302. The ENTRY_POINT_CONTENT_URL 304 sub-field defines a string containing a URL at which one or more files containing icons are stored. The ICON_VERSION 306 sub-field identifies a version of an icon to retrieve from the URL.

The SERVICE_SOURCE_IDENTIFIER 308 field identifies a source of the service. The source of the service may specify the identity of a server via which the email service is received. This may for example be the identity of a server hosting collaborative software or "groupware" (such as Microsoft® Exchange) with email capability. In some embodiments this could be refined to specify a service sub-type, such as the particular brand of collaborative software or particular email service provider (e.g. Yahoo!).

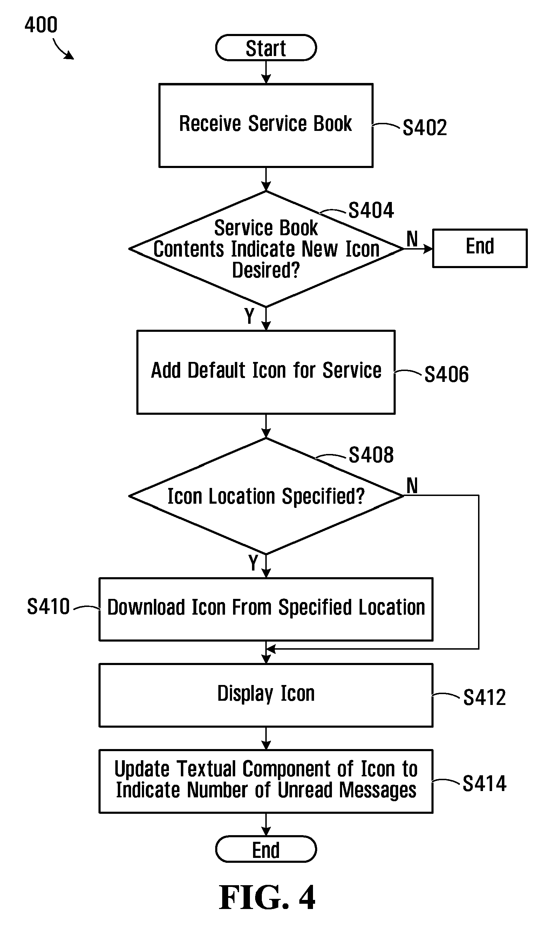

FIG. 4 is a flowchart illustrating operation 400 of the wireless communication device 10 when an email service is provisioned (i.e. when steps are taken to configure the device 10 to be able to receive and display messages from a particular email account). Operation 400 is performed by the ribbon application 130D of FIG. 1. For purposes of FIG. 4, it is assumed that the wireless communication device 10 has previously been provisioned with the primary email service A, and that now the device 10 is to be provisioned with a secondary email service B.

Provisioning of email service B may be initiated by a device user through a web-connected computer. Using a conventional browser, the user may access a web-server based redirector service and configure it to forward email messages from service B to the device 10. The user may specify such parameters as the username and password associated with the secondary email account, a frequency at which the account should be checked for new messages, and other parameters. When configuration is complete, the redirector service software may use the provided information to automatically generate the service book 132, which may then be automatically transmitted to the device 10.

At wireless communication device 10, the service book 132 is received (S402) and stored in flash memory 116. Upon its receipt, which may be detected by a listener software component, the service book 132 is parsed by the device 10, and data therefrom may be copied into entries in a local service book database (not illustrated). The service book database on the device 10 may store service addressing information and may perform the same type of function that MX records, DNS, and individual hosts files do in the context of the Internet Protocol (IP). As well as containing addressing information for a service, an entry in the service book database may also: provide a name and description for a host service; identify the content protocols that the host service uses; identify the encryption and compression models that the host service uses; identify the certificate authority from which the device can retrieve (if necessary) the appropriate cryptographic key for traffic with the service; and specify configuration data that pertains to applications on the device that will use the associated service.

During parsing, the service book 132 of FIG.3 is examined for the existence of an ENTRY_POINT_PARAMETER_SUBFIELD 302 (S404). If the field is not present, this indicates that the ribbon application 130D need not create a new icon for viewing email messages specific to service B, and operation terminates. In the present example, however, the field is present, as shown in FIG. 3. Accordingly, the ribbon application initially adds a default icon to the ribbon for invoking PIM 130C to view only messages received via service B (S406). The new icon may conveniently be placed proximately to other icons which also invoke the PIM 130C to display messages, but for other services, or all services in a unified list.

If further parsing of the service book 132 reveals that an ENTRY_POINT_CONTENT_URL 304 subfield is absent (S408), then operation advances to S412 (described below). In the present example, a valid URL is specified in field 304. Accordingly, internal APIs are used to open an HTTP connection to the relevant server hosting the specified URL, and the icon is downloaded (S410). This is analogous to the use of a conventional web browser to display an image file at a remote web server. If the ICON_VERSION 306 subfield has been specified in the service book 132, the appropriate version of the icon is downloaded from the server based on this information. If a first attempt to access the U RL fails, e.g., because the device 10 is out of coverage or because the server does not provide a response, one or more further attempts may be made.

Icons may be entirely textual, entirely graphical, partly graphical and partly textual. An icon may allow the relevant email service to be identified at a glance. For example, if the email service has an associated logo or trademark, that logo or trademark may comprise the icon. Alternatively, a textual icon component could serve to identify the email service textually (e.g. "Yahoo!", "Hotmail", etc.). The new icon may be visually distinct from the other icons.

It is noted that, when an icon is downloaded, it may arrive in the form of an "icon set", i.e. a file containing a "strip of images" representing the icon in different states (e.g. selected, unselected, no unread messages remaining for this service, at least one unread messages remaining for this service). "Unread messages" refers to the presence of at least one email message received via the relevant service which has not yet been read by (presented to) the user. This icon set may be accompanied by information indicating which icon represents which state. The icon set may be "dissected" to create individual icon images at the device 10. These icon images may be associated with different states of a single "application entry point" (icon) in the ribbon. During operation, the ribbon application 130D tracks which application entry point currently has focus and displays the appropriate icon image based on this information, and possibly other state information for the entry point (e.g. whether unread email messages exist).

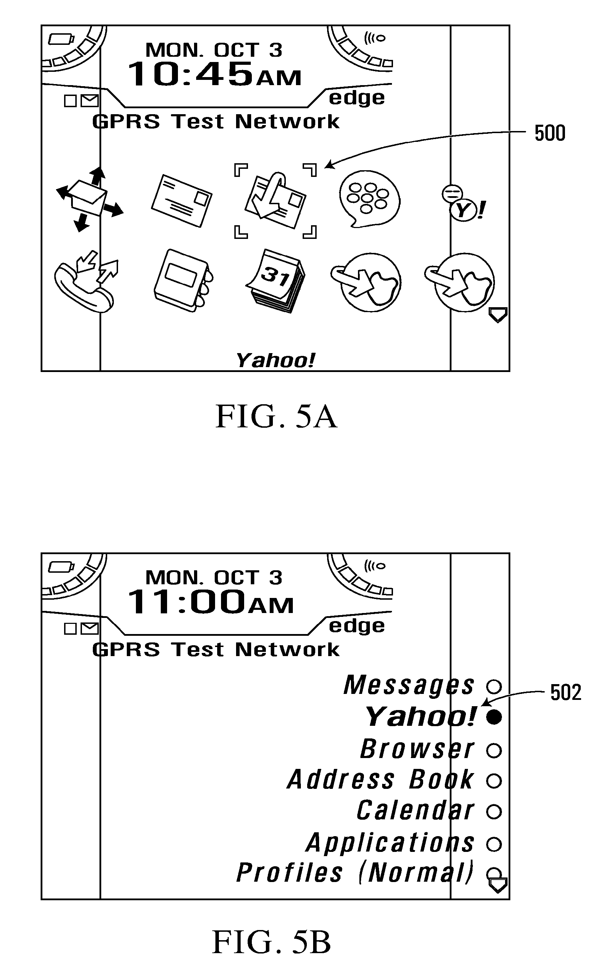

Ultimately, the ribbon application 130D displays the icon (S412), e.g. as shown in FIG. 5A at 500 or FIG. 5B at 502. In FIG. 5A, the textual component of icon 500 is centered at the bottom of the home screen. Icons 500 and 502 are both illustrated in "selected" form, i.e., as they appear when the focus is on the icons. The textual component may be referred to as a "title".

Optionally, the ribbon application 130D may update the textual component of the icon to reflect a number of unread (i.e. not yet presented) email messages for the relevant service, in parentheses for example (e.g. "Yahoo! (3)") (S414, FIG. 4). The number may be updated periodically to provide a dynamic, "at a glance" indication of the current number of unread messages for the service.

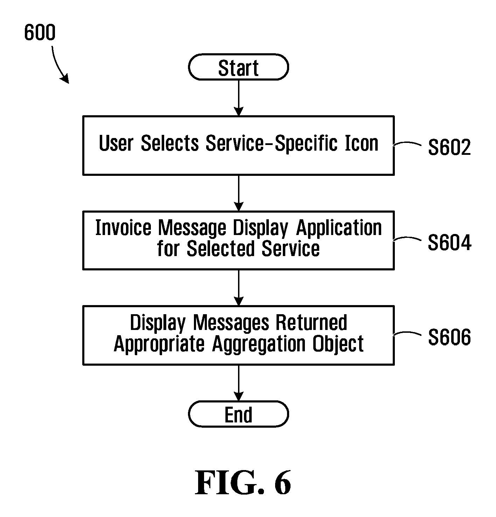

FIG. 6 illustrates operation 600 at wireless communication device 10 for presenting a set of service-specific email messages. Initially, one of the newly-created icons 500 or 502 of FIG. 5A or 5B (depending upon whether the operative home screen uses graphical icons as in FIG. 5A or exclusively textual icons as in FIG. 5B) is selected by a user (S602). Assuming the selected icon pertains to services B, this causes the PIM application 130C to be invoked with a parameter specifying that only messages received via new service B are to be displayed (S604).

Referring to FIG. 2, when the PIM application 130C is invoked, the message display module 210 invokes the getMessages() method 228 of aggregation object 226, which aggregates only messages received via service B. In turn, the getMessages() method 228 invokes a getmessages() method 236 of email message hierarchy 234, which returns representations of email messages received via service B organized by folder. Message hierarchy 234 may have been created upon provisioning of the email service. The aggregation object 226 orders the messages based on date and time of receipt to create an ordered list 216. This ordering may actually occur upon provisioning of the device, and periodically thereafter, with the resultant ordered list of email messages 216 being cached within aggregation object 226, to promote prompt response during operation 600. The list of email messages 216 is returned to the module 210, which then displays the messages as shown at 700 in FIG. 7 (S606 of FIG. 6). In FIG. 7, only one exemplary email message is represented at 702; often more will be displayed each in a separate row. A descriptor identifying service B is displayed at 704.

In the event that the user wishes to view email messages from another service such as service A, the icon for that service may be selected from the ribbon on the home screen. The same operation 600 would then be used to display only messages received via the new service of interest. The display of messages from that service may be expedited by the prompt return of a cached list of messages by the relevant aggregation object of aggregation layer 204.

If it is desired to display all messages, regardless of the service by which they were received, the same procedure is again used, with the exception that the returned list of email messages 212 will represent messages received from any service (service A or B in the present example). In this case, no specific service identifier is included at the top of the message display.

Optionally, the PIM application 130C may permit subsets of the currently displayed service-specific set of email messages to be excluded from presentation. For example, if one of the folders within the email message hierarchy of the data storage layer 206 (FIG. 2) is a "filed messages" folder, the messages in that folder may be considered less important for presentation given that they have already been viewed and categorized. A "hide filed messages" option provided by the PIM 130C may trigger redisplay of the messages without the excluded messages. To support such operation, a further set of aggregation objects 222', 224' and 226', which are variants of aggregation objects 222, 224 and 226 respectively, may be maintained, as shown in FIG. 8. The variant objects differ from their counterparts in that the generated email lists 212', 214' and 216' do not include email messages from the filed messages folders of the relevant email message hierarchy objects at the data storage layer 206. The exclusion of these folders and email messages is represented in FIG. 8 by their illustration in dotted outline. Thus, if the "hide filed messages" setting is toggled when messages received via service B are displayed for example, the display message module 210 will alternate between presenting email messages from list 216 (FIG. 2) and list 216' (FIG. 8).

If, during perusal of a set of service-specific email messages presented as shown in FIG. 7, the user wishes to compose and send an email message, the PIM 130C defaults to using the service whose messages were just displayed for sending the message. This is illustrated in the "compose message" user interface screen 900 of FIG. 9. As illustrated, the "Send Using:" field value 902 defaults to the name of the service whose messages were being displayed just prior to selection of the "compose" command. The value of field 902 can be overridden by the user if, desired, to identify another service.

Similarly, if the user wishes to perform a text-based search of email messages stored at device 10, the messages that will be searched are initially limited to the messages received via the service whose messages were being displayed just prior to the user's invocation of the "search" command. This is illustrated in the "search" screen 1000 of FIG. 10, where the "Service:" field value 1002 defaults to the name of the relevant service. The set of messages to be searched can be changed by the user to messages received via another service, or all messages.

If the listener software component determines that the service book 132 has been updated in the flash memory 116 of device 10 (FIG. 1), e.g. in response to a user's reprovisioning of the associated email service via the web-based redirector software, then the service book 132 is examined to ascertain anew whether a service-specific icon should be added to the ribbon and if so, whether a desired icon should be downloaded from an internet-based server. Depending upon the content of the service book 132, it may be necessary to delete an existing icon from the ribbon (if field 302 is now absent), to create a new icon within the ribbon, or to change the icon. If the service book is deleted from memory 116, any associated icon is deleted from the ribbon.

As will be appreciated by those skilled in the art, modifications to the above-described embodiment can be made without departing from the essence of the invention. For example, there are many ways of instructing wireless communication device 10 to create a separate icon besides including an ENTRY_POINT_PARAMETER_SUBFIELD 302 within a service book 132. These may include transmission of a separate file or command to the device 10 for example.

In another alternative, the address of the server storing the icons which are downloaded by the device 10 is not necessarily a URL. Other forms of network addresses or addressing schemes for identifying icons at a remote server may be employed. These will be readily apparent to those skilled in the art.

Some embodiments of wireless communication device 10 may have the ability to configure different alerts for email messages based on the service by which they are received prior to forwarding to the device 10. Such embodiments may have profiles which support configurable alerts for each email service that exists on the device. Service-specific alerts may even be downloaded in a similar manner to the downloading of service-specific icons.

In some embodiment, the device 10 may include a configurable option that allows the user to choose to be prompted for the email service to use when composing a new email message. The option may provide two settings: "Use Default" and "Prompt". For the former setting, the default service may be based on the identity of the email recipient (e.g. frank@providerX.com) as specified by the user, or upon a user-specified default service setting. For the "Prompt" setting, the user may only be prompted for a desired service if the number of email services for which the device 10 has been provisioned is greater than one. If only one service has been provisioned, it may be assumed that that service is to be used without prompting the user. Other modifications will be apparent to those skilled in the art and, therefore, the invention is defined in the claims.

### COPYRIGHT NOTICE

A portion of the disclosure of this patent document contains material which is subject to copyright protection. The copyright owner has no objection to the facsimile reproduction by any one of the patent document or patent disclosure, as it appears in a Patent Office patent file or records, but otherwise reserves all copyright rights whatsoever.

## Claims

1. A method of displaying icons on a wireless communication device having memory storing multiple sets of electronic mail (email) messages, each of the sets of email messages having been received via a distinct email service account, the method comprising:
displaying a plurality of selectable icons, each of said icons for invoking a computer program for presenting a distinct one of the sets of email messages received via the distinct email service account at a user interface of said wireless communication device upon its selection.

2. The method of claim 1 further comprising:
prior to said displaying, for each of said plurality of selectable icons, receiving an indication at said wireless communication device of a network address of a server storing said selectable icon; and
causing said selectable icon to be copied from said server to said wireless communication device.

3. The method of claim 2 wherein said causing said selectable icon to be copied comprises causing a file containing a set of icons indicating different states of the associated email service account to be copied.

4. The method of claim 3 wherein said set of icons comprises at least one of an icon indicating a selected state, an icon indicating an unselected state, an icon indicating at least one email message stored in said memory of said wireless communication device has not previously been presented, and an icon indicating all email messages stored in said memory of said wireless communication device have previously been presented.

5. The method of any one of claims 2 to 4 wherein said network address is a uniform resource locator (URL).

6. The method of any one of claims 2 to 5 wherein said icon comprises text.

7. The method of claim 6 wherein said text identifies the email service account by which the set of email messages to be presented upon selection of the icon was received.

8. The method of claim 6 or claim 7 wherein said text comprises a number of email messages stored in said memory of said wireless communication device which have not previously been presented to the user.

9. The method of any one of claims 2 to 5 wherein said icon consists of text.

10. The method of claim 9 wherein said text identifies the email service account by which the set of email messages to be presented upon selection of the icon was received.

11. The method of either of claims 9 or 10 wherein said text comprises a number of email messages stored in said memory of said wireless communication device which have not previously been presented to the user.

12. A machine-readable medium comprising code for execution at a computing device, said code being executable in a processor of said computing device for implementing the method of any one of claims 1 to 11.

13. The machine readable medium of claim 12, wherein the computing device comprises a wireless communication device.

14. A computer program product comprising the machine readable medium of claim 12 or claim 13.

15. A wireless communication device comprising the machine readable medium of claim 13.

16. A communication system comprising a plurality of wireless communication devices of claim 15.

## Amended claims

### Amended claims in accordance with Rule 86(2) EPC.

**1.** A method of displaying icons (500, 502) on a wireless communication device (10) having memory (116) storing multiple sets of email messages, each of the sets of email messages having been received via a distinct email service account, the method comprising:
displaying a plurality of selectable icons, each icon of said plurality of selectable icons for invoking a computer program (130C) for presenting a distinct one of the sets of email messages received via the distinct email service account at a user interface of said wireless communication device (10) upon its selection, wherein said each icon is extracted from a file containing multiple icon images representing the icon in different states.

**2.** The method of claim 1 wherein said different states comprise at least two of a selected state, an unselected state, a state indicating at least one email message stored in said memory (116) of said wireless communication device (10) has not previously been presented, and a state indicating all email messages stored in said memory of said wireless communication device have previously been presented.

**3.** The method of claim 1 or claim 2 wherein said each icon comprises text.

**4.** The method of claim 3 wherein said text identifies the email service account by which the set of email messages to be presented upon selection of the icon was received.

**5.** The method of claim 3 or claim 4 wherein said text comprises a number of email messages stored in said memory (116) of said wireless communication device (10) which have not previously been presented to the user.

**6.** The method of claim 1 or claim 2 wherein said each icon comprises text.

**7.** The method of claim 6 wherein said text identifies the email service account by which the set of email messages to be presented upon selection of the icon was received.

**8.** The method of either of claims 6 or 7 wherein said text comprises a number of email messages stored in said memory (116) of said wireless communication device (10) which have not previously been presented to the user.

**9.** A machine-readable medium (116) comprising code for execution at a computing device (10), said code being executable in a processor (18) of said computing device for implementing the method of any one of claims 1 to 8.

**10.** The machine readable medium (116) of claim 9, wherein the computing device comprises a wireless communication device (10).

**11.** A computer program product comprising the machine readable medium (116) of claim 9 or claim 9.

**12.** A wireless communication device (10) comprising the machine readable medium (116) of claim 10.

**13.** A communication system comprising a plurality of wireless communication devices (10) of claim 12.
